# EUROPEAN PATENT APPLICATION

(11) **EP 4 759 599 A1**
(43) Date of publication of application: **17.06.2026**
(21) Application number: 25216104.7
(22) Date of filing: 15.11.2025
(51) Int. Cl.: B60K 28/06, B60W 40/08, B60W 50/10, B60W 50/12

(54) **DRIVING SUPPORT CONTROL DEVICE, DRIVING SUPPORT METHOD, AND COMPUTER PROGRAM**

(30) Priority: 10.12.2024 JP 2024215490
(71) Applicant: Toyota Jidosha Kabushiki Kaisha, Toyota-shi, Aichi-ken 471-8571 (JP)
(72) Inventor: TANAKA, Yusuke, TOYOTA-SHI, AICHI-KEN, 471-8571 (JP); FUKAYA, Motohiro, TOYOTA-SHI, AICHI-KEN, 471-8571 (JP); TOSHIMA, Kohei, TOYOTA-SHI, AICHI-KEN, 471-8571 (JP); MORIMOTO, Kazuhiro, TOYOTA-SHI, AICHI-KEN, 471-8571 (JP)
(74) Representative: Cabinet Beau de Loménie

(57) **Abstract**

The driving support control device (6) for a vehicle (100) is configured to execute driving support for responding to driver abnormality in response to it being judged that a driver of the vehicle (100) is in an abnormal state in which it is difficult to continue driving of the vehicle (100), suspend the driving support when a predetermined suspension condition is established during the driving support, and when it is estimated that the driver is grasping a steering wheel, make the suspension condition less likely to be established than when it is estimated that the driver is not grasping the steering wheel.

## Description

### TECHNICAL FIELD

The present invention relates to a driving support control device, a driving support method, and a computer program.

### BACKGROUND ART

Patent Literature 1 discloses a conventional vehicle driving control device which is configured to judge whether a driver is in an abnormal state, and execute deceleration and stop control to decelerate the vehicle and maintain the vehicle in a stopped state when the driver is in an abnormal state.

### CITATION LIST

### PATENT LITERATURE

PTL 1 Japanese Unexamined Patent Publication (Kokai) No. 2021-109559

### SUMMARY

### [TECHNICAL PROBLEM ]

The vehicle driving control device of the prior art described above is configured to judge that the driver is in a state in which driving operations cannot be performed when there are no changes in the amounts of accelerator pedal operation, brake pedal operation, and steering torque, and judge that the driver is in an abnormal state when the state in which driving operations cannot be performed continues for equal to or longer than a predetermined time. The control device is further configured such that when there is a change in any of the amounts of accelerator pedal operation, brake pedal operation, and steering torque during the deceleration and stop control, it is judged that the driver has intervened in the driving operation (hereinafter referred to as "override"), and the deceleration and stop control is suspended.

However, the driver may enter an abnormal state in which it is difficult for driving of the vehicle to continue due to a sudden change in physical condition, etc., while grasping the steering wheel. When the driver enters an abnormal state while grasping the steering wheel, there is a risk that steering torque will be generated for some reason during deceleration and stop control, for example, if the driver falls to the side while grasping the steering wheel. As a result, in the case of the vehicle driving control device of the prior art described above, it may be judged that an override has been performed, and the deceleration and stop control may be suspended. Specifically, there is a risk that the deceleration and stop control may be suspended due to an unintentional override, even though the driver is in an abnormal state.

The present invention has been conceived in light of such problems, and an object thereof is to prevent unintentional overrides from causing the suspension of driving support for responding to driver abnormality regardless of the driver being in an abnormal state.

### SOLUTION TO PROBLEM

In order to solve the above problem, the driving support control device for a vehicle according to one aspect of the present invention is configured to execute driving support for responding to driver abnormality in response to it being judged that a driver of the vehicle is in an abnormal state in which it is difficult to continue driving of the vehicle, suspend the driving support when a predetermined suspension condition is established during the driving support, and when it is estimated that the driver is grasping a steering wheel, make the suspension condition less likely to be established than when it is estimated that the driver is not grasping the steering wheel.

Further, the driving support method according to one aspect of the present invention is performed by a control device of a vehicle, and includes executing driving support for responding to driver abnormality in response to it being judged that a driver of the vehicle is in an abnormal state in which it is difficult to continue driving of the vehicle, suspending the driving support when a predetermined suspension condition is established during the driving support, and when it is estimated that the driver is grasping a steering wheel, making the suspension condition less likely to be established than when it is estimated that the driver is not grasping the steering wheel.

Further, the computer program according to one aspect of the present invention causes a computer to execute processing of executing driving support for responding to driver abnormality in response to it being judged that a driver of a vehicle is in an abnormal state in which it is difficult to continue driving of the vehicle, suspending the driving support when a predetermined suspension condition is established during the driving support, and when it is estimated that the driver is grasping a steering wheel, making the suspension condition less likely to be established than when it is estimated that the driver is not grasping the steering wheel.

### ADVANTAGEOUS EFFECTS OF INVENTION

According to these aspects of the present invention, it is possible to prevent unintentional overrides from causing the suspension of driving support for responding to driver abnormality regardless of the driver being in an abnormal state.

### BRIEF DESCRIPTION OF DRAWINGS

FIG. 1 is a schematic view of a vehicle according to a first embodiment of the present invention.
FIG. 2 is a flowchart explaining suspension processing of driving support for driver abnormality according to the first embodiment of the present invention.
FIG. 3 is a flowchart explaining suspension processing of driving support for driver abnormality according to a second embodiment of the present invention.

### DESCRIPTION OF EMBODIMENTS

Embodiments of the present invention will be described in detail below with reference to the drawings. Note that in the following description, identical constituent elements have been assigned the same reference signs.

### (First Embodiment)

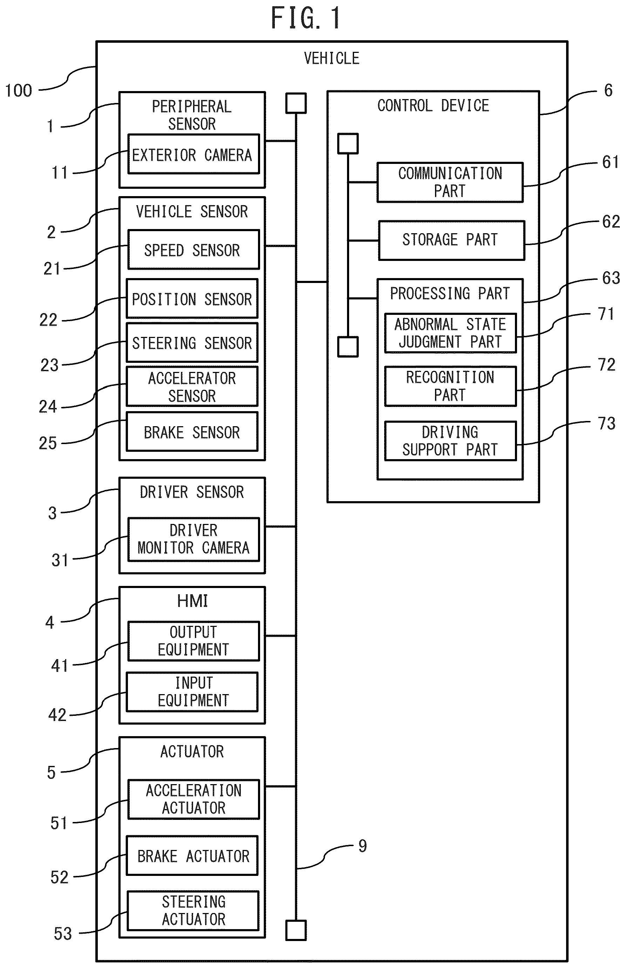

FIG. 1 is a schematic view of a vehicle 100 according to a first embodiment of the present invention.

The vehicle 100 includes a peripheral sensor 1, a vehicle sensor 2, a driver sensor 3, a human machine interface (HMI) 4, an actuator 5, and a control device 6. The peripheral sensor 1, the vehicle sensor 2, the driver sensor 3, the HMI 4, the actuator 5, and the control device 6 are communicatively connected to each other via an in-vehicle network 9 which complies with a standard such as controller area network.

The peripheral sensor 1 is a sensor for generating peripheral data representing the situation around the vehicle 100. The vehicle 100 according to the present embodiment includes, as the peripheral sensor 1, one or a plurality of exterior cameras 11 for capturing the surroundings of the vehicle 100. The exterior camera 11 captures the surroundings of the vehicle 100 at a predetermined frame rate (for example, 10 [Hz] to 40 [Hz]) and generates a surrounding image showing the surroundings of the vehicle 100. The exterior camera 11 transmits the generated surrounding image to the control device 6 as surrounding data every time it generates a surrounding image.

In addition to the exterior camera 11, a ranging sensor for measuring the distance to a target or a feature present around the vehicle 100 may be provided as the peripheral sensor 1. Examples of the ranging sensor include LiDAR (Light Detection And Ranging) which irradiates radar light and measures distance based on the reflected light, and a millimeter wave radar sensor which irradiates radio waves and measures distance based on the reflected waves.

The vehicle sensor 2 is a sensor for acquiring vehicle data representing the state of the vehicle 100. The vehicle 100 according to the present embodiment includes, as the vehicle sensor 2, a speed sensor 21 for acquiring speed data representing the traveling speed of the vehicle 100, a position sensor 22 for acquiring current position data representing the current position of the vehicle 100 such as latitude and longitude, a steering sensor 23 for acquiring data related to steering operation such as steering grip, steering torque, and steering angle, an accelerator sensor 24 for acquiring data related to accelerator operation such as the amount of depression of the accelerator pedal, and a brake sensor 25 for acquiring data related to brake operation such as detection of operation input of the brake pedal. However, the vehicle sensor 2 is not limited to these sensors. Each type of data acquired by each sensor 21 to 25 is transmitted to the control device 6 as vehicle data.

The driver sensor 3 is a sensor for generating driver data representing the state of the driver. The vehicle 100 according to the present embodiment includes, as the driver sensor 3, a driver monitor camera 31 for capturing the appearance of the driver including the face of the driver. The driver monitor camera 31 captures the appearance of the driver at a predetermined frame rate (for example, 10 [Hz] to 40 [Hz]) and generates an appearance image showing the appearance of the driver. The driver monitor camera 31 transmits the generated appearance image to the control device 6 as driver data every time it generates an appearance image of the driver.

The HMI 4 is a user interface for exchanging information between the vehicle 100 and the occupants thereof. The HMI 4 includes output equipment 41 for notifying the vehicle occupants via the bodily senses (for example, vision, hearing, touch, etc.) of the vehicle occupants, and input equipment 42 with which the vehicle occupants can perform input operations and response operations. The output equipment 41 is, for example, a display (for example, a meter display, a center display, a heads-up display, etc.) and a speaker. The input equipment 42 is, for example, a touch panel and a microphone.

The HMI 4 notifies the vehicle occupants of information corresponding to the output signal received from the control device 6 via the output equipment 41, and transmits data input by the vehicle occupants to the control device 6 via the input equipment 42.

The HMI 4 may be installed in advance in the vehicle 100, or may be a terminal such as a smartphone owned by the vehicle occupants (driver and passengers). In the latter case, for example, information may be exchanged between the vehicle 100 and the terminal of the vehicle occupants by short-range wireless communication, or information may be exchanged indirectly via the server by communicating between the terminal of the vehicle occupants and an external server (not illustrated).

The actuator 5 is a device used for driving control of the vehicle 100. The vehicle 100 according to the present embodiment includes, as the actuator 5, an acceleration actuator 51 (for example, at least one of an engine and a motor) for performing acceleration control of the vehicle 100, a brake actuator 52 (for example, a hydraulic actuator) for performing brake control of the vehicle 100, and a steering actuator 53 (for example, a steering motor) for performing steering control of the vehicle 100.

The control device 6 is an electronic control unit (ECU) including a communication part 61, a storage part 62, and a processing part 63.

The communication part 61 includes an interface circuit for connecting the control device 6 to the in-vehicle network 9. The communication part 61 supplies various data received from the outside to the processing part 63. The communication part 61 also outputs various signals output from the processing part 63 to the outside.

The storage part 62 includes a storage medium such as a hard disk drive (HDD), a solid disk drive (SSD), or a semiconductor memory, and stores various computer programs and data used in the processing by the processing part 63.

The processing part 63 includes one or more central processing units (CPUs) and peripheral circuits therefor, and executes various computer programs stored in the storage part 62. The processing part 63 is, for example, a processor. The processing part 63 may further include other arithmetic circuits such as a logic arithmetic unit, a numerical arithmetic unit, or a graphic processing unit. The processing part 63 executes processing in accordance with the computer programs, thereby functioning as an abnormal state judgment part 71, a recognition part 72, and a driving support part 73, and operates as a functional part (module) for realizing predetermined functions. In the following description, when processing in which the functional parts 71 to 73 are the subject is described, it indicates that the processing part 63 is executing a program for realizing each of the functional parts 71 to 73.

Specific processing executed by the control device 6 will be described below. Specifically, the contents of each of the functional parts 71 to 73 realized by the processing part 63 executing the processing according to the computer program will be described.

The abnormal state judgment part 71 judges whether the driver has entered into an abnormal state (hereinafter simply referred to as an "abnormal state") in which it is difficult to continue driving due to, for example, a sudden change in physical condition, etc. In the present embodiment, the abnormal state judgment part 71 judges that the driver has entered into an abnormal state when a predetermined abnormality presumption state continues for a predetermined judgment time T1 [s].

The abnormality presumption state is a state in which the driver is considered to be in an abnormal state. Examples of abnormality presumption states include a state in which the driver has their eyes closed, a state in which the posture of the driver is distorted, and a state in which the driver is not operating the steering wheel unless the driving support that allows hands-free driving is being executed. A state in which the posture of the driver is distorted is, for example, a state in which the driver lies face down, looks down, or leans back due to muscle relaxation caused by loss of consciousness, or the head or upper body of the driver is tilted or fallen to the side, or a state in which the driver is arched due to rigidity caused by epilepsy, etc.

Whether the driver has their eyes closed, the posture of the driver is distorted, or the steering wheel is not being operated can be judged from, for example, the appearance of the driver based on the image of the driver monitor camera 31. Furthermore, whether the steering wheel is not being operated can be judged based on at least one of the types of information when any of the information of the steering touch sensor, steering torque, and steering angle is acquired, or based on at least one of the types of information and the image of the driver monitor camera 31.

The recognition part 72 recognizes targets and features around the vehicle 100. The recognition part 72 sequentially inputs the surrounding images received from the exterior camera 11 to a classifier, for example, to recognize targets in the surrounding images, such as other vehicles, motorcycles, and pedestrians, and features such as curbs, fences, and other similar structures (hereinafter referred to as "dividing features") and road markings (for example, dividing lines that define driving lanes). The classifier can be, for example, a convolutional neural network (CNN) having multiple convolution layers connected in series from the input side to the output side. The recognition part 72 also calculates the distances from the vehicle 100 to the targets and features using, for example, the standard sizes of the targets and features stored in the storage part 62 for each type of target and feature and the sizes of the targets and features recognized in the surrounding images, and calculates the positions of the targets and features. Note that the method of recognizing the targets and features is not limited to this method, and various known methods may be used for recognition.

The driving support part 73 controls the actuator 5 based on the targets and features recognized by the recognition part 72, and executes driving support involving driving control of the vehicle 100. In the present embodiment, the driving support part 73 can execute driving support involving driving control of the vehicle 100 at a driving control level of level 3 defined by the Society of Automotive Engineers (SAE), and specifically, a driving control level that does not require the driver to operate each of the actuators 51 to 53 and monitor the surroundings. The driving support part 73 can also execute driving support involving driving control of the vehicle 100 at a driving control level where the driver is involved in driving the vehicle 100, for example, a driving control level of level 1 or level 2 as defined by the SAE.

As one of the driving supports accompanying the driving control of the vehicle 100, when the driver is judged to be in an abnormal state, the driving support part 73 executes driving support for driver abnormality to respond to the driver abnormality. Specifically, when it is judged that the driver is in an abnormal state, the driving support part 73 first executes notification control to notify the driver of a control notice (alarm) or the like via the HMI 4. Thereafter, after a predetermined time T2 [s] has elapsed since starting the notification, the driving support part 73 executes deceleration and stop control to decelerate the vehicle 100 and maintain the vehicle 100 in a stopped state. Specifically, the driving support for driver abnormality includes the notification control, and the deceleration and stop control consisting of deceleration control and stop maintenance control.

Furthermore, how the vehicle 100 is decelerated and stopped is not particularly limited as long as the risk of contact with road users outside the vehicle when executing the deceleration and stop control is taken into consideration. For example, when the dividing line of the lane of the vehicle can be recognized, the vehicle 100 is decelerated along the dividing line of the lane of the vehicle and maintained in the stopped state, when the dividing line of the lane of the vehicle cannot be recognized, the vehicle 100 is decelerated along the trajectory of the vehicle ahead and maintained in the stopped state, and when neither the dividing line of the lane of the vehicle nor the vehicle ahead can be recognized, the vehicle 100 can be decelerated while moving straight and maintained in the stopped state. Furthermore, for example, in consideration of the rescue of the driver and the safety of disembarkation of passengers, the lane may be changed to move the vehicle to the lane on the roadway side or to the shoulder.

Note that when the driver performs an override operation, such as steering, accelerating, or braking, during driving support for driver abnormality, it is desirable to suspend the driving support, since it can be determined that the state of the driver is a normal state in which driving can be continued.

However, it is possible that the driver may enter an abnormal state while still grasping the steering wheel. If the driver enters an abnormal state while still grasping the steering wheel, the driver may fall to the side while still grasping the steering wheel, and some other incident may result in an unintentional steering operation, which may generate steering torque. In such a case, there is a risk that the driving support for driver abnormality may be suspended due to an unintentional override during the driving support, even though the driver is in an abnormal state.

Thus, in the present embodiment, when it is estimated that the driver is grasping the steering wheel during driving support for driver abnormality, the driving support for driver abnormality is made less likely to be suspended as compared to when it is estimated that the driver is not grasping the steering wheel.

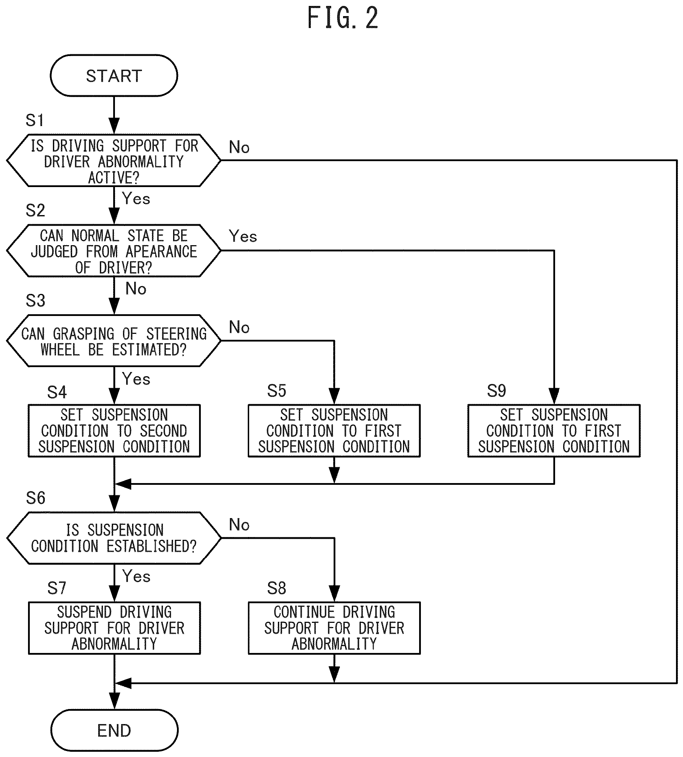

FIG. 2 is a flowchart explaining the suspension processing of the driving support for driver abnormality according to the present embodiment, which is executed by the driving support part 73, and in turn, the control device 6. The control device 6 repeatedly executes this routine at a predetermined calculation cycle.

In step S1, the control device 6 judges whether the vehicle is in driving support for driver abnormality. When the vehicle is in driving support for driver abnormality, the control device 6 proceeds to the processing of step S2. Conversely, when the vehicle is not in driving support for driver abnormality, the control device 6 ends the current processing.

In step S2, the control device 6 judges whether it is possible to determine from the appearance of the driver that the driver has returned to a normal state in which driving can be continued. Specifically, the control device 6 judges whether it is possible to determine from the appearance of the driver that the driver has returned to a normal state based on an image of the driver monitor camera 31. When the control device 6 cannot determine from the appearance of the driver that the driver has returned to a normal state, the control device 6 proceeds to the processing of step S3.

Conversely, when the control device 6 can determine from the appearance of the driver that the driver has returned to a normal state, and i.e., the driver is no longer in a closed-eye state or the posture of the driver has returned from an unstable state, and the control device 6 can determine from the appearance of the driver that the state of the driver is no longer an abnormality presumption state, since there is a risk that the control device 6 may have mistakenly judged the driver to be in an abnormal state when in fact the driver was in a normal state and started driving support for driver abnormality, the control device 6 proceeds to the processing of step S9.

In step S3, the control device 6 estimates whether the driver is grasping the steering wheel. When the control device 6 estimates that the driver is grasping the steering wheel, the control device 6 proceeds to the processing of step S4. Conversely, when the control device 6 estimates that the driver is not grasping the steering wheel, the control device 6 proceeds to the processing of step S5.

The method for estimating whether the driver is grasping the steering wheel is not particularly limited. For example, when direct data related to the steering operation is acquired from the steering sensor 23 in the manner of the present embodiment, it can be estimated based on this information. Furthermore, when direct data related to the steering operation is not acquired, it can be estimated from the appearance of the driver based on the image of the driver monitor camera 31. Furthermore, regardless of whether direct data related to the steering operation is acquired, for example, when it is judged that the driver is in an abnormal state because the driver has closed their eyes or the posture of the driver is distorted based on the image of the driver monitor camera 31, and driving support for driver abnormality is started, it may be estimated that the driver is grasping the steering wheel without executing estimation of whether the driver is grasping the steering wheel.

In step S4, since there is a risk that the driver may be in an abnormal state while still grasping the steering wheel, and thus, that an unintentional steering operation may be performed for some reason, the control device 6 sets the suspension condition for driving support for driver abnormality to a second suspension condition which is less likely to be established than a normal first suspension condition which is set when it is estimated that the steering wheel is not being grasped.

In the present embodiment, it is judged that a cancel operation has been performed once each time a steering operation, an accelerator operation, or a brake operation is performed once, the first suspension condition is made detection of a predetermined first number N1 (for example, once) of a cancel operation, and the second suspension condition is made detection of a predetermined second number N2 (for example, twice), which is greater than the first number N1, of a cancel operation.

Accordingly, in the present embodiment, the number of cancel operation required to suspend driving support for driver abnormality is increased when it is estimated that the driver is grasping the steering wheel, compared to when it is estimated that the driver is not grasping the steering wheel.

As a result, when the driver is estimated to be grasping the steering wheel during driving support for driver abnormality, the driving support is not suspended unless a predetermined cancel operation is detected at least twice. Accordingly, even if a driver who has entered into an abnormal state while grasping the steering wheel performs an unintentional steering operation once, the driving support will not be suspended. Thus, it is possible to prevent the driving support for driver abnormality from being suspended due to an unintentional override by the driver, even if the driver is in an abnormal state.

In the present embodiment, regarding whether each of the steering operation, accelerator operation, and brake operation has been performed, when the operation change amount of each operation becomes equal to or greater than a predetermined amount or simply when an operation input for each operation is detected, it may be judged that the operation has been performed.

In step S5, the control device 6 sets the suspension condition of the driving support for driver abnormality to the normal first suspension condition.

In step S6, the control device 6 judges whether the suspension condition of the driving support for driver abnormality is established. If the suspension condition of the driving support for driver abnormality is established, the control device 6 proceeds to the processing of step S7. Conversely, when the suspension condition of the driving support for driver abnormality is not established, the control device 6 proceeds to the processing of step S8.

In step S7, the control device 6 suspends the driving support for driver abnormality.

In step S8, the control device 6 continues providing driving support for driver abnormality.

In step S9, the control device 6 sets the suspension condition of the driving support for driver abnormality to the normal first suspension condition. When the control device 6 proceeds to step S9, as described above, there is a risk that it may be erroneously judged that the driver to be in an abnormal state even though the driver is in a normal state, and the driving support for may be started. In this case, if the suspension condition is set to the second suspension condition simply because the driver is grasping the steering wheel, it becomes more difficult than usual for a normal driver to establish the suspension condition and suspend the driving support for driver abnormality.

Thus, since the suspension condition of the driving support for driver abnormality can be set to the normal first suspension condition when there is a risk that that it has been mistakenly judged that the state of the driver is abnormal despite being in a normal state and driving support for driver abnormality is started, even if the suspension condition has been changed to the second suspension condition once, it is possible to return to the first suspension condition, thereby preventing a normal driver from finding it more difficult than necessary to suspend the driving support for driver abnormality.

In the present embodiment, as described above, the first suspension condition is made detection of a predetermined first number N1 of the cancel operation, and the second suspension condition is made detection of a predetermined second number (for example, twice), which is greater than the first number of repetitions N1, of cancel operation.

However, the first suspension condition and the second suspension condition are not limited to such conditions, and for example, in a modification example of the present embodiment, the first suspension condition can be made one detection of any of steering operation, accelerator operation, and brake operation, and the second suspension condition can be made one detection of at least one pedal operation of accelerator operation and brake operation. In other words, when it is estimated that the driver is grasping the steering wheel, the pedal operation can be made a required cancel operation.

As a result, when it is estimated that the driver is grasping the steering wheel during the driving support for driver abnormality, the detection of pedal operation of the vehicle 100 is a necessary condition for suspending the driving support. Thus, even if an unintentional steering operation is performed by a driver who has entered into an abnormal state while grasping the steering wheel, the driving support for driver abnormality will not be suspended unless a pedal operation is performed. Thus, it is possible to prevent the driving support for driver abnormality from being suspended due to an unintentional steering operation by the driver, even though the driver is in an abnormal state.

The control device 6 (driving support control device) of the vehicle 100 of the present embodiment described above is configured to execute the driving support for driver abnormality to respond to driver abnormality in response to the driver of the vehicle 100 being judged to be in an abnormal state in which it is difficult to continue driving the vehicle 100, suspend the driving support when a specified suspension condition is established during the driving support for driver abnormality, and make it less likely for the suspension condition to be established when it is estimated that the driver is grasping the steering wheel, compared to when it is estimated that the driver is not grasping the steering wheel.

As a result, if the driver falls into an abnormal state while still grasping the steering wheel, it becomes less likely for the suspension condition for the driving support for driver abnormality to be established, thereby preventing the driving support from being suspended due to an unintentional override by the driver, even when the driver is in an abnormal state.

In the present embodiment, the suspension condition is made less likely to be established by changing content of the suspension condition.

Specifically, in the present embodiment, the control device 6 is configured to suspend the driving support in response to detection of a predetermined number of a predetermined cancel operation during the driving support for driver abnormality, and increase the predetermined number when it is estimated that the steering wheel is being grasped, compared to when it is estimated that the steering wheel is not being grasped.

As a result, since the driving support is not suspended unless a predetermined cancel operation is detected at least twice when the driver is estimated to be grasping the steering wheel during driving support for driver abnormality, even if a driver who has entered into an abnormal state while grasping the steering wheel performs an unintentional steering operation once, the driving support will not be suspended. Thus, it is possible to prevent the driving support for driver abnormality from being suspended due to an unintentional override by the driver, even if the driver is in an abnormal state.

In a modification example of the present embodiment, the control device 6 is configured to suspend the driving support in response to detection of a predetermined number of a predetermined cancel operation during driving support for driver abnormality, and not treat the pedal operation of the vehicle as a required cancel operation when it is estimated that the steering wheel is not being grasped, and treat the pedal operation of the vehicle as a required cancel operation when it is estimated that the steering wheel is being grasped.

As a result, when the driver is estimated to be grasping the steering wheel during driving support for driver abnormality, detection of pedal operation of the vehicle 100 is a necessary condition for suspending the driving support. Thus, even if an unintentional steering operation is performed by a driver who has entered into an abnormal state while grasping the steering wheel, the driving support for driver abnormality will not be suspended unless a pedal operation is performed. Thus, it is possible to prevent the driving support for driver abnormality from being suspended due to an unintentional steering operation by the driver, even if the driver is in an abnormal state.

Furthermore, in the present embodiment, in case in which the content of the suspension condition of the driving support for driver abnormality has been changed so that the suspension condition is less likely to be established, the control device 6 is configured to restore the content of the suspension condition when it is judged that the driver is not in an abnormal state,.

As a result, when there is a risk that it has been mistakenly judged that the state of the driver is an abnormal when in fact the driver is in a normal state and the driving support for driver abnormality has been started, the suspension condition of the driving support for driver abnormality can be returned to the normal first suspension condition, thereby preventing a normal driver from finding it more difficult than necessary to suspend the driving support for driver abnormality.

### (Second Embodiment)

Next, a second embodiment of the present invention will be described. The present embodiment differs from the first embodiment in making the driving support for driver abnormality less likely to be suspended by making the steering operation less likely to be detected as a cancel operation when it is estimated that the driver is grasping the steering wheel, compared to when it is estimated that the driver is not grasping the steering wheel. Primarily the differences are described below.

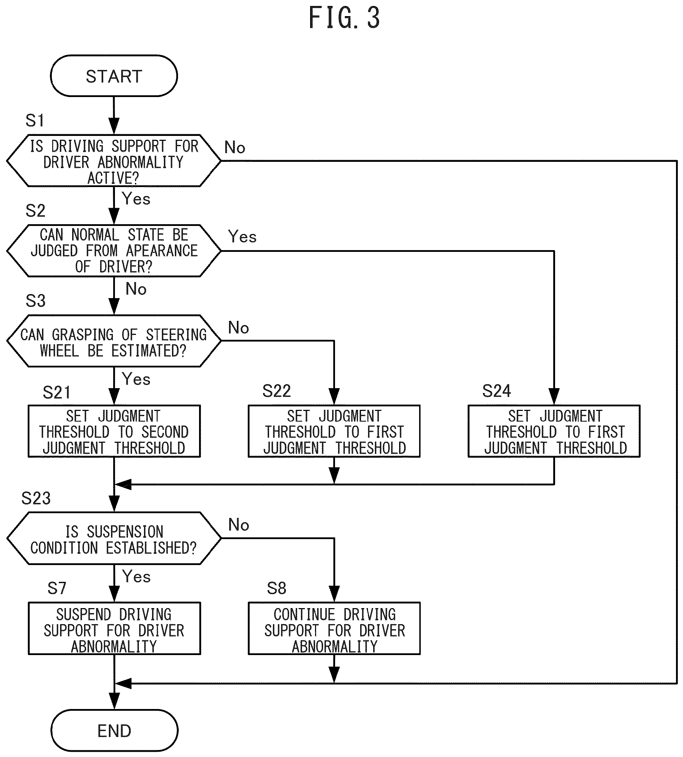

FIG. 3 is a flowchart explaining a suspension process of the driving support for driver abnormality according to the present embodiment, which is executed by the driving support part 73 and in turn, the control device 6. The control device 6 executes this routine repeatedly at a predetermined calculation period. Note that since the contents of the processing of steps S1 to S3, S7, and S8 are the same as those of the first embodiment, description thereof has been omitted.

In step S21, since there is a possibility that the driver has entered into an abnormal state while still grasping the steering wheel, and thus, that an unintentional steering operation may be performed for some reason, the control device 6 makes the steering operation less likely to be detected as a cancel operation, compared to when it is estimated that the driver is not grasping the steering wheel.

Specifically, regarding the steering operation, the control device 6 judges that the steering operation has been performed when the operation change amount (for example, steering torque or steering angle) of the steering operation becomes equal to or greater than a predetermined judgment threshold, when it is estimated that the driver is not grasping the steering wheel, the judgment threshold for judging whether a steering operation has been performed is set to a first judgment threshold, and when it is estimated that the driver is grasping the steering wheel, the judgment threshold is set to a predetermined second judgment threshold, which is greater than the first judgment threshold. Thus, in step S21, the control device 6 sets the judgment threshold for judging whether a steering operation has been performed to the second judgment threshold.

As a result, when it is estimated that the driver is grasping the steering wheel, the judgment threshold for judging whether a steering operation has been performed can be made greater than when it is estimated that the driver is not grasping the steering wheel. Thus, even if an unintentional steering operation is performed by a driver who has entered into an abnormal state while grasping the steering wheel, it is possible to prevent the steering operation from being detected as a cancel operation. Thus, it is possible to prevent the driving support for driver abnormality from being suspended due to an unintentional steering operation by the driver, even though the driver is in an abnormal state.

In step S22, the control device 6 sets the judgment threshold for judging whether a steering operation has been performed to the first judgment threshold.

In step S23, the control device 6 judges whether the suspension condition of the driving support for driver abnormality is established. In the present embodiment, the control device 6 judges that the cancel operation is performed once every time the steering operation, the accelerator operation, or the brake operation is performed once, and judges that the suspension condition is established when any of the steering operation, the accelerator operation, and the brake operation is detected a predetermined third number N3. The third number N3 is one in the present embodiment, but is not limited to this and can be any number equal to or greater than one. The suspension condition may be the same as that of the first embodiment or a modification example thereof.

In step S24, the control device 6 sets the judgment threshold for judging whether a steering operation has been performed to the first judgment threshold.

The control device 6 according to the present embodiment described above is configured to suspend the driving support in response to detection of a predetermined number of a predetermined cancel operation including at least a steering operation of the steering wheel during the driving support for driver abnormality, and make the suspension condition less likely to be established by making the steering operation less likely to be detected as the cancel operation when it is estimated that the driver is grasping the steering wheel, compared to when it is estimated that the driver is not grasping the steering wheel.

Specifically, in the present embodiment, the control device 6 is configured to judge that a steering operation has been performed when the operation change amount of the steering operation becomes equal to or greater than a predetermined judgment threshold, and increase the judgment threshold when it is estimated that the driver is grasping the steering wheel, compared to when it is estimated that the driver is not grasping the steering wheel.

As a result, when it is estimated that the driver is grasping the steering wheel, the judgment threshold for judging whether a steering operation has been performed can be made greater than when it is estimated that the driver is not grasping the steering wheel. Accordingly, even if an unintentional steering operation is performed by a driver who has entered into an abnormal state while grasping the steering wheel, the steering operation can be prevented from being detected as a cancel operation. Thus, it is possible to prevent the driving support for driver abnormality from being suspended due to an unintentional steering operation by the driver, even though the driver is in an abnormal state.

Furthermore, in the present embodiment, in the case in which the steering operation has been made less likely to be detected as a cancel operation so that the suspension condition of driving support for driver abnormality is less likely to be established, the control device 6 is configured to restore the ease of detection when detecting a steering operation as a cancel operation when the driver is judged not to be in an abnormal state,.

As a result, in the manner of the first embodiment, in cases in which there is a risk that it may be mistakenly judged that the driver is in an abnormal state despite being in a normal state and the driving support for driver abnormality has been started, it is possible to restore the ease of detection when detecting a steering operation as a cancel operation, thereby preventing it from becoming more difficult than necessary for the normal driver to suspend the driving support for driver abnormality.

Though the embodiments of the present invention have been described above, the embodiments described above merely illustrate some of the application examples of the present invention, and are not intended that the technical scope of the present invention be limited to the specific configurations of the embodiments described above.

For example, the suspension conditions described in each of the embodiments described above may be combined to form a suspension condition. Furthermore, the embodiments described above may be appropriately combined.

Furthermore, for example, in the embodiments described above, the computer program executed by the control device 6 may be provided in a form recorded on a computer-readable portable recording medium such as a semiconductor memory, a magnetic recording medium, or an optical recording medium, or may be provided as a computer program product.

### DESCRIPTION OF REFERENCE SIGNS

- 6: control device (driving support control device)
- 100: vehicle

## Claims

1. A driving support control device (6) for a vehicle (100), the driving support control device (6) being configured to:
execute driving support for responding to driver abnormality in response to it being judged that a driver of the vehicle (100) is in an abnormal state in which it is difficult to continue driving of the vehicle (100);
suspend the driving support when a predetermined suspension condition is established during the driving support; and
when it is estimated that the driver is grasping a steering wheel, make the suspension condition less likely to be established than when it is estimated that the driver is not grasping the steering wheel.

2. The driving support control device (6) according to claim 1, wherein the driving support control device (6) is configured to make the suspension condition less likely to be established by changing content of the suspension condition between when the driver is estimated to be grasping the steering wheel and when the driver is estimated not to be grasping the steering wheel.

3. The driving support control device (6) according to claim 2, wherein the driving support control device (6) is configured to:
suspend the driving support in response to detection of a predetermined number of a predetermined cancel operation during the driving support; and
increase the predetermined number when it is estimated that the steering wheel is being grasped, compared to when it is estimated that the steering wheel is not being grasped.

4. The driving support control device (6) according to claim 2 or claim 3, wherein the driving support control device (6) is configured to:
suspend the driving support in response to detection of a predetermined number of a predetermined cancel operation during the driving support;
when it is estimated that the steering wheel is not being grasped, not treat pedal operation of the vehicle (100) as a required cancel operation; and
when it is estimated that the steering wheel is being grasped, treat pedal operation of the vehicle (100) as a required cancel operation.

5. The driving support control device (6) according to any one of claims 2 to 4, wherein in the case in which the content of the suspension condition has been changed so that the suspension condition is less likely to be established, the driving support control device (6) is configured to restore the content of the suspension condition when it is judged that the driver is not in the abnormal state.

6. The driving support control device (6) according to claim 3 or claim 4, wherein the cancel operation includes a steering operation of the steering wheel and a pedal operation of the vehicle (100).

7. The driving support control device (6) according to claim 1, wherein the driving support control device (6) is configured to:
suspend the driving support in response to detection of a predetermined number of a predetermined cancel operation including at least a steering operation of the steering wheel during the driving support; and
make the suspension condition less likely to be established by making the steering operation less likely to be detected as the cancel operation when it is estimated that the driver is grasping the steering wheel, compared to when it is estimated that the driver is not grasping the steering wheel.

8. The driving support control device (6) according to claim 7, wherein the driving support control device (6) is configured to:
judge that the steering operation has been performed when an operation change amount of the steering operation is equal to or greater than a predetermined judgment threshold; and
increase the judgment threshold when it is estimated that the driver is grasping the steering wheel, compared to when it is estimated that the driver is not grasping the steering wheel.

9. The driving support control device (6) according to claim 7 or claim 8, wherein in the case in which the steering operation has been made less likely to be detected as the cancel operation so that the suspension condition is less likely to be established, the driving support control device (6) is configured to restore ease of detection when detecting the steering operation as the cancel operation when it is judged that the driver is not in the abnormal state.

10. The driving support control device (6) according to any one of claims 1 to 9, wherein the driving support includes:
notification control which is started in response to the driver being judged to be in an abnormal state and which is for issuing a notification to the driver; and
deceleration and stop control which starts after a predetermined time has elapsed since start of the notification and which is for decelerating the vehicle (100) and maintaining the vehicle (100) in a stopped state.

11. A driving support method for a vehicle (100), comprising:
executing driving support for responding to driver abnormality in response to it being judged that a driver of the vehicle (100) is in an abnormal state in which it is difficult to continue driving of the vehicle (100);
suspending the driving support when a predetermined suspension condition is established during the driving support; and
when it is estimated that the driver is grasping a steering wheel, making the suspension condition less likely to be established than when it is estimated that the driver is not grasping the steering wheel.

12. A computer program which causes a computer to execute processing of:
executing driving support for responding to driver abnormality in response to it being judged that a driver of a vehicle (100) is in an abnormal state in which it is difficult to continue driving of the vehicle (100);
suspending the driving support when a predetermined suspension condition is established during the driving support; and
when it is estimated that the driver is grasping a steering wheel, making the suspension condition less likely to be established than when it is estimated that the driver is not grasping the steering wheel.
